(19) **Europäisches Patentamt / European Patent Office / Office européen des brevets**

(11) **EP 4 755 603 A1**

(12) **EUROPEAN PATENT APPLICATION**

(43) Date of publication:
**10.06.2026 Bulletin 2026/24**

(21) Application number: **24217359.9**

(22) Date of filing: **04.12.2024**

(51) International Patent Classification (IPC):
**B29B 17/02** (2006.01)      **B32B 43/00** (2006.01)

(52) Cooperative Patent Classification (CPC):
**B29B 17/02; B32B 43/006;** B29B 2017/0289

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Henkel AG & Co. KGaA**
**40589 Düsseldorf (DE)**

(72) Inventors:
• **Schaefer, Sascha**
  **40822 Mettmann (DE)**
• **Köhler, Theresia**
  **53757 Sankt Augustin (DE)**
• **Salazar La Rosa, Abel David**
  **40223 Düsseldorf (DE)**
• **Renken, Raul**
  **40229 Düsseldorf (DE)**
• **Peng, Ke**
  **40215 Dusseldorf (DE)**

(54) **EFFECTIVE REMOVAL OF ELASTIC ADHESIVES OR SEALANTS**

(57)    The invention relates a process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate.

EP 4 755 603 A1

**Description**

The invention relates to a process for removal of elastic adhesives or sealants, in particular for removal of silicone adhesives or sealants.

Silicone adhesives and sealants are widely used for joining of different substrates.

For recycling of materials, it is desired to be able to detach adhesively bonded joints to separate the components into their single parts without damaging them. Such non-destructive debonding is useful for reworking misplaced components during production, but also for recycling the components and (re)using them.

It is a prerequisite that the joint needs to hold under the specific conditions of use and does not detach accidently. The debonding step must only be able to be performed in a controlled way accurately at the time desired by the user.

Besides, the boundary condition for detaching an adhesively bonded joint must be viable in practice and must comply with health, safety, and environmental regulations.

Ideally, the adhesive should be able to be easily removed from the components, so they can be used again without complex treatment steps. Even more favorable would be an adhesive failure, meaning that the adhesive remains on one substrate only after debonding.

In general, adhesive joints are detached by applying a trigger which leads to the weakening of the adhesive network leading to adhesive or cohesive failure of the joint. Several triggers of e.g. thermal, electrical, chemical, ultrasonic nature are well-known. However, cured silicone sealants are typically very strong and difficult to remove.

Hence, the debonding requires mechanical or chemical methods.

These chemical compositions are designed to break down/strip the silicone sealant itself, soften it but also to break the bond between the silicone and the surface. Usually, the composition contains a blend of solvents and active ingredients that break the bond between the silicone and the substrate surface.

They can be applied as gel to the silicone joint or contaminated surface, which is often used in home applications to remove e.g. old sealants but is not made for big scale processes in industry.

In other applications, the contaminated surface or the joint substrates are immersed in chemical compositions at ambient or elevated temperatures. They can contain high amounts of hazardous chemicals like xylene or N-alkyl-pyrrolidone, or require concentrated acidic or basic solutions of solvents, acids or bases and surfactants.

Some processes require multi-step treatment where the object to be cleaned is soaked in different solutions and requires a sophisticated setup of a cascade of bathes.

A quite simple process is the thermal degradation of the silicone sealant. This requires temperatures higher than 300°C. Apart from the high energy needed for the degradation it can be only used for heat-stable materials/applications.

Another way to remove silicones is the use of mechanical tools like, e.g. knives or multi-saws to cut out the silicone sealant. In addition, a chemical composition as described above is needed to soften the cured adhesive and remove residues on the surface.

Another way is to use abrasive materials, like steel wool to remove the cured material from the surface. When using knives or abrasive materials to remove the silicone there is a huge risk to damage the surfaces / components.

US 8,492,199 B2 relates to chip containing electronic devices and, in particular, to Multichip Ceramic Modules (MCM's) containing a plurality of chips electrically connected to a substrate with solder bumps, which chips are underfilled with a reworkable composition which allows one or more chips to be removed from the module and replaced.

It is explained that the underfill and dam composition of this patent when cured forms a highly cross-linked domain in a base resin matrix, which cured composition has excellent reworkable characteristics. In particular, the cured composition is highly soluble in xylene and if the chip requires replacement, the underfill can easily be removed by immersion of the module or the chip in xylene or other suitable solvent. The reworkable underfill can be removed in xylene at room temperature and once removed, the chip can be removed from the substrate using heat to melt the solder interconnection. The substrate would then be dressed and cleaned providing a clean C4 pad site to which a new chip can be rejoined.

US 2024/0076586 A1 belongs to the technical field of silicone sealants, and in particular to a formula of a remover reagent for a cured silicone sealant and a method using the same. A remover agent for cured silicone sealant is described, wherein the remover agent comprises an acid catalyst and a solvent, and the acid catalyst and the solvent each have a boiling point of higher than 120°C and a flash point of higher than 100°C.

However, use of water for removal of elastic adhesives and sealants and for detaching a second substrate attached to said first substrate via at least one silicone joint is not discussed in this patent application.

US 10,260,027 B2 relates to a substrate detergent composition. A method of cleaning a surface of a semiconductor substrate is described, wherein the surface is contaminated with a silicone resin, whose water contact angle is 100° or more. The method comprises cleaning the surface by using a semiconductor substrate detergent composition, comprising

(A) a quaternary ammonium salt: 0.1 to 2.0% by mass;

(B) water: 0.1 to 4.0% by mass; and

(C) at least one organic solvent,

wherein the at least one organic solvent comprises at least one hydroxyl group in one molecule: 94.0 to 99.8% by mass, to obtain a semiconductor substrate whose water contact angle is reduced to 10 to 30°,

wherein the semiconductor substrate having the surface to be cleaned is a thin substrate which has been thin-processed to have a thickness of 20 to 100 μm used for a semiconductor package.

However, use of water at a temperature within the range of from 50°C to 150°C for removal of elastic adhesives and sealants and for detaching a second substrate attached to said first substrate via at least one silicone joint is not discussed in this patent application.

In US20020000239A1, a cured (silicone) resin on metal or ceramic surface is stripped by immersion at elevated temperatures (>60°C) in a composition comprising a base (quaternary ammonium hydroxide), a non-ionic or amphoteric surfactant, a non-hazardous high boiling organic solvent (glycol ether) and eventually a N-alkyl pyrrolidone.

However, use of water at a temperature within the range of from 50°C to 150°C for removal of elastic adhesives and sealants and for detaching a second substrate attached to said first substrate via at least one silicone joint is not discussed in this patent application.

WO 2022/214176 A1 describes the decomposition of silicones with hydrothermal or supercritical water with temperatures above 140°C.

However, a process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate is not described in this patent application.

US 6,652,665 B1 relates to a method of removing cured silicone polymer deposits from the surface of electronic components to provide product rework, recovery, and defect repair in microelectronics fabrication. The patent is particularly concerned with a method of removing cured Sylgard(TM) (Trademark of Dow Corning Corp.) and related elastomeric silicone adhesives from the surface of ceramics, metals, cured epoxy resins, and polyimides for reclamation and reuse of the recovered semiconductor assembly parts. A method of removing cured silicone polymer deposits from electronic components is disclosed, which method comprises the sequential steps of: immersing the electronic components in a preheated solution of 0.2 to 5.0 weight % quaternary ammonium fluoride in a hydrophobic non-hydroxylic aprotic solvent, wherein the hydrophobic non-hydroxylic aprotic solvent is propylene glycol alkyl ether alcoate, with agitation, for a first predetermined period of time; immersing the electronic components in a preheated solvent consisting essentially of a hydrophobic non-hydroxylic aprotic solvent, wherein the hydrophobic non-hydroxylic aprotic solvent is propylene glycol alkyl ether alcoate, with agitation, for a second predetermined period of time; immersing or rinsing or spraying the electronic components with a hydrophilic, essentially water soluble solvent, wherein the hydrophilic, essentially water soluble solvent comprises propylene glycol alkyl ethers, with agitation for about 5 to 10 minutes; transporting the electronic components to an aqueous rinse bath and applying a water rinse; and drying the electronic components, wherein the cured silicone polymer deposits are removed.

However, use of water for removal of elastic adhesives and sealants and for detaching a second substrate attached to said first substrate via at least one silicone joint is not discussed in this patent.

US 6,805,753 B2 relates to a method to separate silicone seal by thermal degradation. A method for removing silicone sealant from a glass ceramic surface of a cooktop is disclosed, wherein the method comprises:

a) providing a cooktop having a glass ceramic surface and a silicone sealant;

b) heating the cooktop to a temperature greater than 325 degrees Celsius to thermally degrade the silicone sealant; and

c) removing the silicone sealant from the cooktop.

Preferably, mildly abrasive scrubbing pads applied with or without detergents are utilized to mechanically remove excess degraded sealant from salvaged cooktop components after heating. Alternatively, industrial washers using water, detergents and/or other suitable solvents may be used to clean the salvaged cooktop components.

However, a process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate is not described in this patent.

Finally, it is taught in internet (cf. https://siliconedepot.com/blog/how-does-silicone-remover-work/) that

- acetone, isopropyl alcohol, mineral spirits, or some form of petroleum (gasoline) are widely used as silicone removers; and that

- mineral spirits, rubbing alcohol, acetone, and xylene are often used as silicone remover solvents.

However, a process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate is not described in this blog.

It was therefore the object of the present invention to provide a better and more efficient process for removal of elastic adhesives or sealants, in particular for a first substrate having a second substrate attached to said first substrate via at least one silicone joint to remove said at least one silicone joint and to detach said second substrate from said first substrate. In particular, a process has been aimed at, which can be carried out in a simple and efficient manner and which avoids use of hazardous materials or of harsh conditions. Said process should also allow for simple upscaling and should be particularly suited for recycling of crosslinked materials. Finally, the products of said process should allow for simple use for preparation of efficient adhesives, sealants, and/or coating materials and for use as additive and as substitute for silicone oils.

The present invention has achieved said objectives by providing a process for removal of elastic adhesives or sealants in accordance with claim 1. Preferred embodiments of said process for removal of elastic adhesives or sealants are described in the depending claims.

The present invention describes a process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate.

A better and more efficient process for removal of elastic adhesives or sealants, in particular for a first substrate having a second substrate attached to said first substrate via at least one silicone joint to remove said at least one silicone joint and to detach said second substrate from said first substrate is shown. In particular, the process according to the invention allows the detachment of silicone hard-to-reach joints without changing the formulation of the adhesive or sealant, using strong chemicals or manual force. The adhesive network and the bond of the adhesive to the substrate surface is weakened and a failure either cohesive or most favorable adhesive is obtained. For this purpose, the adhesive bond is subjected to accelerated ageing. This is achieved by exposure to water at a temperature within the range of from 50°C to 150°C, in particular to water vapor or by water immersion in boiling water preferably under pressure. Optionally an aqueous solution comprising a glycol ether, a surfactant, a solvent and/or dibasic ester can be used instead of pure water to further accelerate the described effect.

The solution of the present invention is advantageous in several aspects:
A very effective method for removal of elastic adhesives and sealants is provided, which yields components, that can be re-used for the preparation of elastic adhesives and sealants in an easy way. The process of the invention can be implemented in a very cheap and easy manner and avoids harsh reaction conditions and use of dangerous, harmful and/or hazardous to health materials. Generally, the components to be used in the process of the present invention are much cheaper than the components to be used in conventional methods; the removal of elastic adhesives and sealants can be carried out at comparatively milder conditions and lower temperatures; the removal of elastic adhesives and sealants of the present invention is faster than conventional methods for removal of elastic adhesives and sealants and is typically completed between 1 minute to 48 hours, preferably between 5 minutes to 24 hours, more preferably between 5 minutes to 6 hours, with high yield; and the method of the present invention is operationally simpler than conventional methods. The process of the invention allows for use of low amounts of cheap, stable, and non-corrosive components and can be carried out at very mild temperatures for a comparable short time. Finally, the process of the invention does also not require any special reactor design or equipment.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In preferred embodiments, the curable composition of the present invention is a moisture curable composition.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements or method steps. If used, the phrase "consisting of" is closed and excludes all additional elements. Further, the phrase "consisting essentially of excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of $\pm 20\%$, preferably $\pm 10\%$ of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights ($M_n$), unless otherwise stipulated. All molecular weight data refers to values obtained by gel permeation chromatography (GPC) carried out using Water 2695 HPLC equipped with 3 Polypore columns and using a RI detector at 35 °C. Stabilized Tetrahydrofuran (THF) was used as eluent at 1 mL/min flow rate. The calibration of the device was carried out using polystyrene standards.

As used herein, "polydispersity" refers to a measure of the distribution of molecular mass given in a resin sample. The polydispersity is calculated by dividing the weight average molecular weight ($M_w$) by the number average molecular weight ($M_n$).

For convenience in the description of the process of this invention, unsaturation provided by $CH_2=CH-CH_2-$ terminal groups is referred to as "allyl" unsaturation.

As used herein, the term "hydrocarbyl" group refers to univalent group formed by removing a hydrogen atom from a hydrocarbon, e.g., methyl, ethyl, propyl, phenyl.

As used herein, "$C_1$-$C_8$ alkyl" group refers to a monovalent group that contains 1 to 8 carbon atoms, that is a radical of an alkane and includes linear and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms ($C_1$-$C_6$ alkyl) - for example unsubstituted alkyl groups containing from 1 to 4 atoms ($C_1$-$C_4$ alkyl) - should be noted.

As used herein, the term "$C_2$-$C_8$ alkenyl" group refers to an aliphatic hydrocarbon group which contains 2 to 8 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "$C_2$-$C_8$ alkynyl" group refers to an aliphatic hydrocarbon group which contains 2 to 8 carbon atoms and at least one carbon-carbon triple bond, e.g., ethynyl (acetylene), propynyl, butynyl, or pentynyl and structural isomers thereof as described above. Alkynyl groups can be linear or branched and substituted or unsubstituted.

The term "$C_3$-$C_{10}$ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and, norbornane.

As used herein, a "$C_6$-$C_{18}$ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and, anthracenyl. And a preference for phenyl groups may be noted.

As used herein, an "aralkyl" group refers to an alkyl group that is substituted with an aryl group. As example of an aralkyl group is benzyl.

The terms "$C_1$-$C_{60}$ alkylene" group and "$C_1$-$C_{20}$ alkylene" group refer respectively to divalent groups that contain from 1 to 60 and from 1 to 20 carbon atoms, that are radicals of an alkane and include linear, branched, or cyclic groups, which groups may be substituted or unsubstituted and may optionally be interrupted by at least one heteroatom.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as Cl, Br, F. Oxygen (O) and nitrogen (N) may be mentioned as typical heteroatoms in the context of the present invention.

Where mentioned, the expression "interrupted by at least one heteroatom" means that the main chain of a residue comprises, as a chain member, at least one atom that differs from carbon atom. More particularly the term "heteroatom" refers to nitrogen, oxygen, halogens, phosphorus or sulfur. Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "halogen" refers to fluorine, chlorine, bromine or iodine and correspondingly the term "halide" denotes fluoride, chloride, bromide, or iodide anions.

According to the present invention, in the process for removal of elastic adhesives or sealants a first substrate having a second substrate attached to said first substrate via at least one silicone joint is contacted with a composition comprising water at a temperature within the range of from 50°C to 150°C, preferably within the range of from 80°C to 140°C, more preferably within the range of from 100°C to 120°C to remove said at least one silicone joint and to detach said second substrate from said first substrate. Preferred substrates in this sense can be made of metal, plastic, glass, wood, ceramic, surface treated or untreated, preferably aluminium, stainless steel, ABS, Polycarbonate, PMMA, Polyethylene, Polypropylene and/or glass.

Said first substrate is preferably contacted with said composition for 1 minute to 48 hours, preferably for 5 minutes to 24 hours, and said first substrate is suitably contacted with said composition under elevated pressure, preferably at a pressure within the range of from 1 bar to 10 bar, more preferably within the range of from 1 bar to 2 bar.

According to particularly preferred embodiments of the invention, steam and/or boiling water is used to contact the first substrate.

The efficiency of the process of the present invention can be further improved by addition of at least one auxiliary component; and therefore said composition preferably comprises at least one component selected from the group consisting of one or more surfactants, one or more solvents, and one or more esters.

Preferred solvents are aliphatic or aromatic hydrocarbons, halogenated hydrocarbons, ketones, ethers, esters, ester alcohols, keto alcohols, keto ethers, keto esters, and ether esters. More preferably, the solvent is selected from the group consisting of one or more glycol ethers and one or more alcohols or a combination thereof, in particular is selected from the group consisting of 2-methoxyethanol, 2-ethoxyethanol, 2-propoxyethanol, 2-isopropoxyethanol, 2-butoxyethanol, 2-hexyloxyethanol, 2-phenoxyethanol, 2-benzyloxyethanol, 2-(2-methoxyethoxy)ethanol, 2-(2-ethoxyethoxy)ethanol, 2-(2-butoxyethoxy)ethanol, diethylenglycolmono-n-hexylether, 1-methoxy-2-propanol, ethoxypropanol, 1-butoxy-2-propanol, 1-hexoxy-2-propanol, dipropylenglycolmonomethylether, dipropylenglycolmonobutylether, dipropylenglycolmonohexylether, ethyleneglycolbutylether, polyethylenglycolether, polypropylenglycolether, and benzene alcohol.

According to preferred embodiments of the invention, the composition comprises at least one anionic surfactant.

The surfactants are preferably selected in accordance with their hydrophobic-lipophilic balances (HLB). Preferably, said HLB is determined by using the Davies method and the HLB preferably ranges from 0 to 40, suitably from 1 to 40, more preferably from 18 to 40, and most preferably is 40. The values are preferably determined according to Davies J T: "A quantitative kinetic theory of emulsion type, I. Physical chemistry of the emulsifying agent," Gas/Liquid and Liquid/Liquid Interface. Proceedings of the International Congress of Surface Activity (1957): 426-438.

Exemplary suitable anionic surfactants are alkali metal sulfosuccinates; sulfonated glyceryl esters of fatty acids such as sulfonated monoglycerides of coconut oil acids; salts of sulfonated monovalent alcohol esters such as sodium oleyl isothionate; amides of amino sulfonic acids such as the sodium salt of oleyl isothionate; amides of amino sulfonic acids such as the sodium salt of oleyl methyl tauride; sulfonated products of fatty acid nitriles such as palmitonitrile sulfonate; sulfonated aromatic hydrocarbons such as sodium alpha-naphthalene monosulfonate; condensation products of naphthalene sulfonic acids with formaldehyde, sodium octahydro anthracene sulfonate; alkali metal alkyl sulfates having alkyl groups of 8 to 30, preferably 8 to 18 carbon atoms; ether sulfates having alkyl groups of 8 to 30, preferably 8 to 18 carbon atoms; and alkylaryl sulfonates having one or more alkyl groups of 8 to 30 carbon atoms. In a preferred embodiment said at least one anionic surfactant comprises a sulfate group, more preferably is selected from alkali metal

6

alkyl sulfates having alkyl groups of 8 to 30, preferably 8 to 18 carbon atoms; most preferably is an alkali metal alkyl sulfate having an alkyl group with 8 to 16 carbon atoms. In a further preferred embodiment, the at least one anionic surfactant comprises, more preferably consists of sodium lauryl sulfate.

In a preferred embodiment, the at least one anionic surfactant is present in 0.01 to 0.2 wt%, preferably 0.02 to 0.2 wt%, more preferably 0.025 to 0.2 wt%, based on the total weight of the composition. In a further preferred embodiment, the anionic surfactant is present in 0.01 to 0.2 wt%, preferably 0.02 to 0.2 wt%, more preferably 0.025 to 0.2 wt%, based on the total weight of the composition and comprises sodium dioctyl sulfosuccinate, more preferred is sodium dioctyl sulfosuccinate. In most preferred embodiments, the amount of anionic surfactant, preferably sodium dioctyl sulfosuccinate, is 0.2 wt% or less, preferably between >0.01 and 0.2 wt% or between 0.025 and 0.2 wt%, based on the total weight of the composition.

Preferred esters to be used in the process of the present invention are dibasic esters or mixtures of at least two dibasic esters or at least one fatty acid ester or a combination thereof. Preferred examples for dibasic esters are, but not limited to, esters of adipic, glutaric, and succinic acids. Typical preferred fatty acids can have up to 30 carbon atoms, can be saturated or unsaturated. Especially preferred examples are, but not limited to, oleic acid, lauric-, myristic-,palmitic acid and stearic acid.

According to preferred embodiments of the present invention, the composition, based on the total weight of the composition, comprises up to 100 wt%, preferably from 50 wt% to 90 wt%, more preferably from 60 wt% to 85 wt% of water.

According to preferred embodiments of the present invention, the composition, based on the total weight of the composition, comprises from 0 wt% to 60 wt%, preferably from 30 wt% to 50 wt% of at least one solvent.

According to preferred embodiments of the present invention, the composition, based on the total weight of the composition, comprises from 0 wt% to 5 wt%, preferably from 0.5 wt% to 2 wt% of at least one su rfactant.

According to preferred embodiments of the present invention, the composition, based on the total weight of the composition, comprises from 0 wt% to 80 %, preferably from 40 wt% to 60 wt% of at least one ester, preferably dibasic ester.

The elastic adhesives and sealants to be removed preferably comprise at least one silane-modified polymer or silicone polymer, preferably organopolysiloxane.

Preferred silane-modified polymers include $\alpha$-silane or $\gamma$-silane type modified polymers. The silane-modified polymers preferably refer to silane-modified polyether polyols, i.e., polymers featuring hydrolysable silyl groups at the terminal ends of the respective prepolymer main chain.

According to a preferred embodiment of the invention, the elastic adhesives or sealants to be removed comprise at least one silane-modified polymer of Formula (I)

$$Y\text{-}[(CR^1{}_2)_b\text{-}SiR_a(OR^2)_{3-a}]_x \qquad (I)$$

wherein, in Formula (I),

Y denotes an x-valent polymer radical bonded via nitrogen, oxygen, sulfur, or carbon,
R is independently selected from a monovalent, optionally substituted, SiC-bonded hydrocarbon radical, $R^1$ is independently selected from hydrogen or a monovalent, optionally substituted hydrocarbon radical which may be attached to the carbon atom via nitrogen, phosphorus, oxygen, sulfur, or carbonyl group,
$R^2$ is independently selected from hydrogen or a monovalent, optionally substituted hydrocarbon radical, x is an integer from 1 to 10, preferably 1, 2 or 3, especially preferably 1 or 2,
a is 0, 1, 2, preferably 0 or 1, more preferably 1, and
b is independently selected from an integer from 1 to 10, preferably 1, 3 and 4, particularly preferably 1 and 3, in particular 3.

Examples of radicals R are alkyl radicals, such as the methyl, ethyl, n-propyl, iso-propyl, 1-n-butyl, 2-n-butyl, iso-butyl, tert. pentyl radical; hexyl radicals, such as the n-hexyl radical; heptyl radicals, such as the n-heptyl radical; octyl radicals, such as the n-octyl radical, iso-octyl radicals and the 2,2,4-trimethylpentyl radical; nonyl radicals, such as the n-nonyl radical; decyl radicals, such as the n-decyl radical; dodecyl radicals, such as the n-dodecyl radical; octadecyl radicals, such as the n-octadecyl radical; cycloalkyl radicals, such as cyclopentyl, cyclohexyl, cycloheptyl and methylcyclohexyl radicals; alkenyl radicals, such as vinyl, 1-propenyl and 2-propenyl radicals; aryl radicals, such as the phenyl, 2-propenyl and 2-propenyl radicals; and phenyl-, naphthyl, anthryl and phenanthryl radicals; alkaryl radicals, such as o-, m-, p-tolyl radicals, xylyl radicals and ethylphenyl radicals; and aralkyl radicals, such as the benzyl radical, the $\alpha$- and the B-phenylethyl radical.

The R radical is preferably a monovalent hydrocarbon radical having 1 to 6 carbon atoms which is optionally substituted by halogen atoms, particularly preferably an alkyl radical having 1 or 2 carbon atoms, in particular methyl radical.

Examples of radicals $R^1$ are hydrogen atoms, the radicals indicated for R and optionally substituted hydrocarbon radicals bonded to the carbon atom via nitrogen, phosphorus, oxygen, sulfur, carbon, or carbonyl groups.

Preferably, $R^1$ is hydrogen or hydrocarbon radicals with 1 to 20 carbon atoms, especially hydrogen.

Examples of $R^2$ are hydrogen or the examples given for R.

Preferably, the $R^2$ radicals are hydrogen or alkyl radicals containing 1 to 10 carbon atoms, optionally substituted by halogen atoms, particularly preferably alkyl radicals containing 1 to 4 carbon atoms, in particular the methyl and ethyl radicals.

For the purposes of the present invention, polymers on which the polymer residue Y is based, are all polymers in which at least 50%, preferably at least 70%, particularly preferably at least 90%, of all bonds in the main chain are carbon-carbon, carbon-nitrogen, or carbon-oxygen bonds. Polymer residues Y are preferably organic polymer residues which are polyoxyalkylenes, such as polyoxyethylene, polyoxypropylene, polyoxybutylene, polyoxytetramethylene, polyoxyethylene-polyoxypropylene copolymer and polyoxypropylene-polyoxybutylene copolymer as polymer chain; which preferably are bonded to each group $-[(CR^1_2)_b\text{-}SiR_a(OR^2)_{3\text{-}a}]_x$ via -NH-C(=O)-NH-, -NR'-C(-O)-NH- , NH-C(=O)-NR'-, wherein R' may be the same or different and has a meaning specified for R, or represents a group - CH(COOR")-CH$_2$-COOR", wherein R" can be the same or different and has the meaning specified for R. Examples of radicals R' include cyclohexyl-, cyclopentyl-, n- and iso-propyl-, n-, iso- and t-butyl-, the various stereoisomers of the pentyl radical, hexyl radical or heptyl radical and the phenyl radical. R' is preferably a group - CH(COOR")-CH$_2$-COOR" or an optionally substituted hydrocarbon radical having 1 to 20 carbon atoms, particularly preferably a linear, branched or cyclic alkyl group having 1 to 20 carbon atoms or an aryl group having 6 to 20 carbon atoms, which is optionally substituted by halogen atoms; R" is preferably an alkyl group having 1 to 10 carbon atoms, particularly preferably a methyl, ethyl or propyl radical.

In Formula (I), the radical Y preferably denotes polyester radicals, polyether polyol radicals, poly(meth)acrylate radicals and/or polyolefin radicals, or copolymer radicals thereof, more preferably polyoxyalkylene radicals, especially polyoxypropylene radicals.

Compounds of Formula (I) can have the groups $-[(CR^1_2)_b\text{-}SiR_a(OR^2)_{3\text{-}a}]_x$ bound in the manner described at any desired position in the polymer, such as located at the terminal ends or located in between the terminal ends, i.e. as side groups of the polymer main chain, particularly preferably at the terminal ends of the polymer chain.

The end groups of the compounds according to Formula (I) are preferably those of the Formula (II)

$$-NH\text{-}C(=O)\text{-}NR'\text{-}(CR^1_2)_b\text{-}SiR_a(OR^2)_{3\text{-}a} \qquad (II),$$

wherein the residues and indices are as above defined.

Particularly, a compound according to Formula (I) may denote silane-terminated polyester, silane-terminated polyether polyols, silane-terminated poly(meth)acrylates, silane-terminated polyolefins and/or copolymers of the aforementioned, more preferably silane-terminated polyethers, in particular silane-terminated polypropylene glycols having dimethoxymethylsilyl, trimethoxysilyl, diethoxymethylsilyl or triethoxysilyl end groups bonded via -NH-C(=O)-NR'-(CR$^1_2$)$_b$-groups, wherein R', $R^1$ and b are as defined above.

The average molecular weights $M_n$ of the compounds according to Formula (I) are preferably at least 400 g/mol, particularly preferably at least 600 g/mol, in particular at least 800 g/mol and preferably at most 30,000 g/mol, particularly preferably at most 19,000 g/mol, in particular at most 13,000 g/mol.

According to various preferred embodiments, the elastic adhesives or sealants to be removed comprise at least one silane-modified polymer having at least one silane-functional group of the Formula (III)

$$-X_o\text{-}R^3\text{-}Si(R^4)_k(R^5)_{3\text{-}k} \qquad (III),$$

wherein

X is a divalent linking group containing at least one heteroatom;
$R^3$ is selected from divalent hydrocarbon residues having 1 to 12 carbon atoms;
each $R^4$ is, independently of one another, selected from a hydrocarbon radical containing 1 to 20 carbon atoms and
each $R^5$ is, independently of one another, selected from a hydroxyl group or a hydrolysable group, wherein $R^4$ and $R^5$ are substituents directly bound with the Si atom or the two of the substituents $R^4$ and $R^5$ form a ring together with the Si atom to which they are bound;
k is 0, 1 or 2; and
o is 1.

In this context, the divalent bonding group (linking group) X comprising at least one heteroatom is understood to be a divalent chemical group which links the polymer backbone of the polymer with the residue $R^3$ of the Formula (III).

In various embodiments, the divalent linking group X in the Formula (III) is urea.

The urea group can be obtained if a terminal secondary amino group on the polymer is used, which reacts with a terminal isocyanate group that is present in the respective reactant. This means that a polymer that is terminally substituted with an amino group is reacted with an isocyanatosilane. Urea groups advantageously increase the strength of the polymer chains and of the overall crosslinked polymer.

In preferred embodiments, the linking group X is -N(R")-C(=O)-N(R")-, wherein R" is defined above.

The index "o" corresponds to 1, i.e., the linking group X links the polymer backbone with the residue $R^3$ (o = 1).

The residue $R^3$ is a divalent hydrocarbon residue having 1 to 12 carbon atoms. The hydrocarbon residue can be a linear, branched, or cyclic alkylene residue and can be substituted or unsubstituted. The hydrocarbon residue can be saturated or unsaturated. In preferred embodiments, $R^3$ is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, $R^3$ is a methylene, ethylene, or n-propylene, in particular a methylene or n-propylene.

Alkoxysilane-functional compounds having a methylene group as binding link to the polymer backbone - so-called "$\alpha$ silanes" - have a particularly high reactivity of the silyl group.

In general, a lengthening of the binding hydrocarbon chain leads to reduced reactivity of the polymers. In particular, "$\gamma$ silanes" - which comprise the unbranched propylene residue as binding link - have a balanced ratio between necessary reactivity (acceptable curing times) and delayed curing (open assembly time, possibility of corrections after bonding).

$R^4$ and $R^5$ are substituents directly bound with the Si atom or the two of the substituents $R^4$ and $R^5$ can form a ring together with the Si atom to which they are bound. In preferred embodiments, $R^4$ and $R^5$ are the substituents directly bound with the Si atom.

Each $R^4$ in the Formula (III) is, independently of one another, selected from a hydrocarbon radical containing 1 to 20 carbon atoms, preferably $C_1$ to Ca alkyl groups, more preferably a methyl or an ethyl.

Each $R^5$ in the Formula (III) is, independently of one another, selected from a hydroxyl group or a hydrolysable group, preferably $C_1$ to Ca alkoxy groups, or $C_1$ to Ca acyloxy groups.

In preferred embodiments, each $R^5$ is, independently of one another, selected from $C_1$ to $C_8$ alkoxy groups, in particular methoxy, ethoxy, i-propyloxy, or i-butyloxy group. Since k is 1, combinations of more than one group are also possible. However, acyloxy groups, such as an acetoxy group -O-CO-CHs, can also be used as hydrolysable groups.

In preferred embodiments, k is 0 or 1.

In particularly preferable embodiments, the silyl group, i.e., $-Si(R^4)_k(R^5)_{3-k}$, is selected from alkyldialkoxysilyl, preferably selected from methyldimethoxysilyl or ethyldiethoxysilyl, most preferably methyldimethoxysilyl. Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising dialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer, and more flexible than systems comprising trialkoxysilyl groups. They are therefore suitable in particular for use as sealants but can also serve as adhesives. In addition, they split off even less alcohol during curing and are therefore of particular interest when the quantity of alcohol released is to be reduced.

Methoxy and ethoxy groups as comparatively small hydrolysable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for one of the $R^5$ and ethoxy for the other $R^5$ within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolysable groups, which by nature exhibit lower reactivity. This is of particular interest if delayed curing is also to be achieved by means of the configuration of the alkoxy groups.

The silane-functional group of Formula (III) can be a lateral group within the polymer chain of the respective polymer or a terminal group of the respective polymer. In preferred embodiments, the silane-functional group of Formula (III) is a terminal group of the polymer.

In preferred embodiments, the polymer has two silane-functional groups of Formula (III). In this case, the polymer can have at least one lateral silane-functional group of Formula (III) and at least one terminal silane-functional group of Formula (III); or, at least two lateral silane-functional groups of Formula (III); or, at least two terminal silane-functional groups of Formula (III).

In particularly preferred embodiments, the polymer has two terminal silane-functional groups of Formula (III).

Then, each polymer chain comprises two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolysable groups - for example by using methoxy groups or longer residues - the configuration of the network that can be achieved as a long-chain system (thermoplastics), relatively wide-mesh three-dimensional network (elastomers) or highly crosslinked system (thermosets) can be controlled, so that inter alia the elasticity, flexibility and heat resistance of the finished crosslinked compositions can be influenced in this way.

In preferred embodiments, the polymer backbone of the polymer is selected from polyester, polyethers, poly(meth)acrylates, polyolefins, or copolymers of at least two polymers, such as polyether and poly(meth)acrylic acid ester copolymers.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof. Polymers having lateral ether groups, such as cellulose ethers, starch ethers and vinyl ether polymers, as well as polyacetals such as polyoxymethylene (POM) are not included in the polyethers.

In particularly preferred embodiments, the silane-modified polymer has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight $M_n$ of the polyether on which the polymer is based is for preference 500 to 100,000 g/mol (Daltons), more preferably 500 to 50,000, particularly preferably 1,000 to 30,000 and in particular 2,000 to 20,000 g/mol, most preferably 8,000 to 20,000 g/mol. Number average molecular weights of at least 500 g/mol are advantageous for the polyethers of the present invention since the corresponding compositions have a balanced ratio of viscosity (ease of processing), strength and elasticity.

A "polyol" is understood to be a compound which contains at least two OH groups, irrespective of whether the compound contains other functional groups. However, a polyol used in accordance with the present invention preferably contains only OH groups as functional groups or, if other functional groups are present, none of these other functional groups is reactive at least to isocyanates under the conditions prevailing during the reaction of the polyol(s) and diisocyanate(s).

The polyols to be used in accordance with the invention have an OH value of preferably about 1 to about 250.

Besides the polyethers, the polyol mixture may contain other polyols. For example, it may contain polyester polyols with a molecular weight of about 200 to about 30,000.

According to another preferred embodiment of the invention, the elastic adhesives or sealants to be removed comprise at least one silicone polymer, preferably organopolysiloxane.

The organopolysiloxane can be any organopolysiloxane used in an addition reaction-curable siloxane resin composition, and is not specifically limited. The structure of the organopolysiloxane can be a linear structure containing a diorganopolysiloxane repeating unit in its main chain, a structure containing a branched chain, or a cyclic structure. Among others, the organopolysiloxane of linear structure is preferred.

The groups bonded to silicone atoms can be any monovalent hydrocarbon group which is unsubstituted or substituted, and do not have an aliphatic unsaturated bond. The monovalent hydrocarbon group can have 1 to 12, preferably 1 to 10, more preferably 1 to 6 carbon atoms. For example, the monovalent hydrocarbon group can be alkyl group, such as methyl, ethyl, propyl, isopropyl, butyl, isobutyl, tert-butyl, pentyl, neo-pentyl, hexyl, heptyl, octyl, nonyl, decyl and dodecyl; cycloalkyl group, such as cyclopentyl, cyclohexyl and cycloheptyl; aryl group, such as phenyl, tolyl, xylyl, naphthyl and biphenyl; and aralkyl group, such as benzyl, phenylethyl, phenylpropyl and methylbenzyl. Among others, unsubstituted or substituted alkyl groups having 1 to 3 carbon atoms and unsubstituted or substituted phenyl groups are preferred; and methyl, ethyl, propyl, chloromethyl, bromoethyl, 3,3,3-trifluoropropyl, cyanoethyl, phenyl, chlorophenyl and fluorophenyl are more preferred. Moreover, the groups bonded to silicone atoms except the vinyl group can be the same, or a combination of two of the above-mentioned groups.

The organopolysiloxane preferably has a dynamic viscosity of 10 mm²/s to 100,000 mm²/s, in particular 500 mm²/s to 50,000 mm²/s at 25°C. If the dynamic viscosity is lower than 10 mm²/s, the storage stability of the curable silicone composition becomes poor. If the dynamic viscosity is higher than 100,000 mm²/s, the viscosity of the curable silicone composition may become too high. The dynamic viscosity can be measured with a Cannon-Fenske viscometer.

Preferably, the organopolysiloxane can be at least one organopolysiloxane represented by the following general formula (IV):

$$(R^c_{3-x}R^d_xSiO_{1/2})_M(R^c_{2-y}R^d_ySiO_{2/2})_D(R^c_{1-z}R^d_zSiO_{3/2})_T(SiO_{4/2})_Q \qquad (IV)$$

wherein each $R^c$ is independently selected from the group consisting of substituted or unsubstituted hydrocarbyl groups, which may be optionally interrupted by at least one heteroatom, a hydroxy group, hydrogen, hydrolysable groups; each $R^d$ is independently selected from aliphatically unsaturated groups; x has a value from 0 to 3, y has a value from 0 to 2, and z has a value from 0 to 1; subscripts M, D, T and Q represent mole fractions of each unit in the unit formula, and subscripts M, D, T, and Q have values such that preferably $0 < M \leq 0.3$, preferably $0.4 \leq D < 1$, preferably $0 \leq T \leq 0.2$ and preferably $0 \leq Q \leq 0.3$, with the proviso that M+D+T+Q=1.

Organopolysiloxane polymers generally comprise the monofunctional (M) siloxy units (i.e., the $(R^c_{3-x}R^d_xSiO_{1/2})$ siloxy units), difunctional (D) siloxy units (i.e., the $(R^c_{2-y}R^d_ySiO_{2/2})$ siloxy units), trifunctional (T) siloxy units (i.e., the $(R^c_{1-z}R^d_zSiO_{3/2})$ siloxy units), and quadrifunctional (Q) siloxy units (i.e., the $(SiO_{4/2})$ siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula $(R^c_{3-x}R^d_xSiO_{1/2})$, and the D siloxy units may be independently selected within the formula $(R^c_{2-y}R^d_ySiO_{2/2})$. The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to $(R^c_3SiO_{1/2})$, $(R^c_2R^dSiO_{1/2})$, $(R^cR^d_2SiO_{1/2})$, and/or $(R^d_3SiO_{1/2})$, depending on whether subscript x is 0, 1, 2 or 3. Similarly, the organopolysiloxane polymer may include D units corresponding to $(R^c_2SiO_{2/2})$, $(R^cR^dSiO_{2/2})$, and/or $(R^d_2SiO_{2/2})$, depending on whether subscript y is 0, 1 or 2. Finally, the T units may be selected from the group consisting of $(R^c_1SiO_{3/2})$ and $(R^dSiO_{3/2})$ and a combination thereof in the organopolysiloxane polymer.

In formula (IV), each $R^c$ is independently selected from the group consisting of substituted or unsubstituted hydrocarbyl groups, which may be optionally interrupted by at least one heteroatom, a hydroxy group, hydrogen, hydrolysable groups. The hydrolysable groups are preferably selected from alkoxy groups, acetate groups, lactate groups, lactic acid groups, or oximino groups. Each $R^c$ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of $R^c$ may be replaced with an atom other than carbon, i.e., $R^c$ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When $R^c$ is not an aryl group, each $R^c$ is typically saturated and not an alkenyl or alkynyl group. In preferred embodiments, each $R^c$ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each $R^c$ is independently selected from the group consisting of alkyl groups, aryl groups, a hydroxy group, hydrogen, alkoxy groups, lactate groups, and lactic acid groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, methoxy group, ethoxy group, n-propoxy group, isopropoxy group, n-butoxy group, isobutoxy group, sec-butoxy group, t-butoxy group, methyl lactate group, ethyl lactate group, and lactic acid.

In particularly preferred embodiments, each $R^c$ is independently selected from the group consisting of methyl, ethyl, propyl, isopropyl, benzyl, phenyl, hydroxy, hydrogen, methoxy group, ethoxy group, n-propoxy group, isopropoxy group, and ethyl lactate group.

Each $R^d$ is independently selected from aliphatically unsaturated groups, which may alternatively be referred to as ethylenic unsaturation. The ethylenic unsaturation in $R^d$ may be terminal. Each $R^d$ may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of $R^2$ include $CH_2=CH-$, $CH_2=CHCH_2-$, $CH_2=CH(CH_2)_4-$, $CH_2=C(CH_3)CH_2-H_2C=C(CH_3)-$, $H_2C=C(CH_3)-$, $H_2C=C(CH_3)CH_2-H_2C=CHCH_2CH_2-$, $H_2C=CHCH_2CH_2CH_2-$, $HC\equiv C-$, $HC\equiv CCH_2-$, $HC\equiv CCH(CH_3)-$, $HC\equiv CC(CH_3)_2-$, and $HC\equiv CC(CH_3)_2CH_2-$. Alternatively, each $R^d$ may be an alkenyl group. Alternatively, each $R^d$ may be independently selected from the group consisting of vinyl, allyl, and hexenyl; alternatively vinyl and hexenyl. Preferably, each $R^2$ may be a vinyl group.

According to preferred embodiments, at least one of x, y, and z are 0, more preferably x, y, and z are 0.

The organopolysiloxane polymer may have one Q siloxy unit, per molecule. Alternatively, the organopolysiloxane polymer may have two Q siloxy units, alternatively three Q siloxy units, per molecule. The organopolysiloxane polymer may have a degree of polymerization (DP) of 5 to 400, alternatively from 10 to 200, alternatively from 14 to 160.

The organopolysiloxane polymer may have a viscosity at 25°C from greater than 0 mm²/s to less than 2,500,000 mm²/s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (Mw) of from greater than 0 to 400,000 g/mol, alternatively from 1,000 g/mol to 200,000 g/mol, alternatively from 1,500 g/mol to 100,000 g/mol. The viscosity of the organopolysiloxane polymer can be measured by BROOKFIELD viscometer. Mw of the organopolysiloxane polymer can be determined via gel permeation chromatography employing a light-scattering detector, a refractive index detector, and a viscosity detector while employing polystyrene standards.

Methods of preparing organopolysiloxane polymers are known in the art, for example, as described in U.S. Patent Application Publication 2002/0061998 to Cray, et al.

Examples of commercially available organopolysiloxane include, for example, Loctite SI 5600 or Loctite SI 5619 from Henkel, or CAF 99 from Elkem.

In the present invention, the organopolysiloxane can be a combination of two or more of the above-mentioned organopolysiloxanes.

The amount of the at least one silane-modified polymer and/or the at least one silicone polymer, preferably organopolysiloxane, i.e., one type of silane-modified polymer or different kinds of silane-modified polymers and/or one type of organopolysiloxane or different kinds of organopolysiloxanes, i.e., two or more different kinds of silane-modified polymers and/or two or more different kinds of organopolysiloxanes, as herein defined above, in the elastic adhesives and sealants to be removed is typically in the range of about 10 to about 95 wt.-%, preferably in the range of about 10 to about 90 wt.-%, even more preferably in the range of about 15 to about 85 wt.-%, for instance about 15, 16, 17, 18, 19, 20, 21, 22, 23, 24, 25, 26, 27, 28, 29, 30, 31, 32, 33, 34, 35, 36, 37, 38, 39, 40, 45, 50, 55, 60, 65, 70, 75, 80 or 85 wt.-%, based on the total weight of the elastic adhesives and sealants to be removed.

The elastic adhesives or sealants to be removed are preferably cured, in particularly moisture cured to form said silicone joint.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation. The following examples serve to illustrate the invention, but the invention is not limited thereto.

The following examples serve to illustrate the invention, but the invention is not limited thereto.

## Examples

Preparation of test specimen:
For the preparation of the test specimen a 2K-silicone formulation (LOCTITE SI 5600 black) was used. The aluminum substrates were joint with a 1 mm bondline. The adhesive was cured at room temperature / 50% relative humidity for at least 7 d.

After curing the test specimen were treated according to Table 2:
Comparative Example CEx 1 (not part of invention): Treatment was conducted in an oven.

Comparative Example CEx 2 (not part of invention), Examples Ex 3 and Ex 4: Specimens were place in a pressure cooker where the bond line was covered by water.

Example Ex 5: Specimen were placed in a 20% aqueous solution of Solution A in a pressure cooker where the bond line was covered with water.

Examples Ex 6 and Ex 7: Specimens were placed in a pressure cooker filled with water. The bond line was above the water.

Exact temperature and pressure settings as well as timings can be seen from Table 2.

After the treatment specimens were taken dried with a paper towel and tensile lab shear strength was measured and compared to initial data.

For the tensile lab shear strength, a Zwick020 was used. Specimens were tested at a test speed of 10 mm/min at 20°C. An average of 5 specimens was taken.

Δ TLSS was calculated as follows:

$$\Delta\ TLSS = (TLSS(treated)-TLSS(initials)) / TLSS(initial)$$

A negative result shows a decrease in strength which is desired and shows that the network was weakened and allows a debonding of the substrates. A positive result resembles an increase in strength which is not desired.

The failure mode was assessed on visual basis. An adhesive failure is defined as failure where adhesive is only on one of the substrates. A cohesive failure is defined where adhesive is left back on both substrates. A mixed failure is a mixture of both failures on the specimen.

Table 1: Solution A

| raw materials | wt% |
| --- | --- |
| dipropylene glycol dimethyl ether | 4.0 |
| benzyl alcohol | 4.0 |
| dibasic ester / Imsol R | 7.5 |
| sodium dioctyl sulfosuccinate 60% / Triton GR5 M | 0.2 |
| oleic Acid Methyl Ester / Mergital MES 2 | 4.0 |
| water | 80.3 |

Tensile lap shear strength test set up

Device: Zwick (10N cartridge)

Test speed: 10 mm/min

Table 2:

| | CEx 1 | CEx 2 | Ex 3 | Ex 4 | Ex 5 | Ex 6 | Ex 7 |
| --- | --- | --- | --- | --- | --- | --- | --- |
| Time [h] | 24 | 720 | 6 | 6 | 6 | 6 | 48 |
| Temperatur e [°C] | 114 | 23 | 95 | 114 | 114 | 114 | 114 |
| Humidity [% RH] (immersion / steaming) | 0 | 100 (im-mersio n, water) | 100 (im-mersio n, water) | 100 (im-mersio n, water) | 100 (im-mersio n, solution A) | 100 (stea-min g) | 100 (stea-min g) |
| Pressure [kPa] | 100 | 100 | 100 | 170 | 170 | 170 | 170 |
| Δ TLSS (initial vs. treated) % (Alu/Alu) | 49.52 | -0.71 | -32.38 | -56.90 | -75.71 | -53 | -94.64 |
| Failure mode | Cohesiv e | Cohesive | Cohesive | Cohesive | Mixed failure | Cohesive | Adhesive |

**Claims**

1. Process for removal of elastic adhesives or sealants in which a first substrate having a second substrate attached to said first substrate via at least one silicone joint is contacted with a composition comprising water at a temperature within the range of from 50°C to 150°C to remove said at least one silicone joint and to detach said second substrate from said first substrate.

2. Process according to claim 1, wherein said first substrate is contacted with steam or boiling water.

3. Process according to claim 1 or 2, wherein said first substrate is contacted with said composition under elevated pressure.

4. Process according to any one of claims 1 to 3, wherein said composition comprises at least one component selected from the group consisting of one or more surfactants, one or more solvents, and one or more esters.

5. Process according to claim 4, wherein the solvent is selected from the group consisting of one or more glycol ethers and one or more alcohols or a combination thereof, in particular is selected from the group consisting of 2-methoxyethanol, 2-ethoxyethanol, 2-propoxyethanol, 2-isopropoxyethanol, 2-butoxyethanol, 2-hexyloxyethanol, 2-phenoxyethanol, 2-benzyloxyethanol, 2-(2-methoxyethoxy)ethanol, 2-(2-ethoxyethoxy)ethanol, 2-(2-butoxyethoxy)ethanol, diethylenglycolmono-n-hexylether, 1-methoxy-2-propanol, ethoxypropanol, 1-butoxy-2-propanol, 1-hexoxy-2-propanol, dipropylenglycolmonomethylether, dipropylenglycolmonobutylether, dipropylenglycolmonohexylether, polyethylenglycolether, polypropylenglycolether and benzene alcohol.

6. Process according to claim 4 or 5, wherein the surfactant comprises at least one anionic surfactant.

7. Process according to any one of claims 4 to 6, wherein the ester is a dibasic ester or a mixture of at least two dibasic esters or at least one fatty acid ester or a combination thereof.

8. Process according to any one of claims 1 to 7, wherein said first substrate is contacted with said composition at a temperature within the range of from 80°C to 140°C, preferably within the range of from 100°C to 120°C.

9. Process according to any one of claims 1 to 8, wherein the removal of elastic adhesives orsealants is completed between 1 minute to 48 hours, preferably between 5 minutes to 24 hours, more preferably between 5 minutes to 6 hours.

10. Process according to any one of claims 1 to 9, wherein said first substrate is contacted with said composition at a pressure within the range of from 1 bar to 10 bar, preferably within the range of from 1 bar to 2 bar.

11. Process according to any one of claims 1 to 10, wherein the composition, based on the total weight of the composition, comprises from up to 100 wt%, preferably from 50 wt% to 90 wt%, more preferably from 60 wt% to 85 wt% of water.

12. Process according to any one of claims 1 to 11, wherein the composition, based on the total weight of the composition, comprises from 0 wt% to 60 wt%, preferably from 30 wt% to 50 wt% of at least one solvent.

13. Process according to any one of claims 1 to 12, wherein the composition, based on the total weight of the composition, comprises from 0 wt% to 5wt%, preferably from 0.5 wt% to 2 wt% of at least one surfactant.

14. Process according to any one of claims 1 to 13, wherein the composition, based on the total weight of the composition, comprises from 0 wt% to 80 %, preferably from 40 wt% to 60 wt% of at least one dibasic ester.

15. Process according to any one of claims 1 to 14, wherein the elastic adhesives or sealants to be removed comprise at least one silane-modified polymer and/or at least one silicone polymer.

Europäisches
Patentamt

European
Patent Office

Office européen
des brevets

# EUROPEAN SEARCH REPORT

**Application Number**

EP 24 21 7359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Fliesenleger.Net Team: "So können Sie problemlos Silikon entfernen!", , 18 August 2015 (2015-08-18), pages 1-5, XP093276949, Retrieved from the Internet: URL:https://www.fliesenleger.net/magazin/silikon-entfernen-mit-dem-richtigen-hilfsmittel-kein-problem-2010177 * the whole document * | 1-3,8-15 | INV. B29B17/02 B32B43/00 |
| X | Dooey Dessimal: "Removing old glazing or caulking with steam! #restoration #glassremoval #culinary", , 5 January 2022 (2022-01-05), XP093276951, Retrieved from the Internet: URL:https://www.youtube.com/watch?v=wysRDZ6rywE * the whole document * | 1-3,8-15 | |
| X | US 2017/114206 A1 (BOKKA SREEVALLI [US] ET AL) 27 April 2017 (2017-04-27) | 1-6,8-15 | TECHNICAL FIELDS SEARCHED (IPC) |
| A | * paragraph [0021] - paragraph [0052]; claim 1 * | 7 | B29B B32B |
| X | US 10 002 549 B2 (AVERY DENNISON CORP [US]) 19 June 2018 (2018-06-19) * the whole document * | 1-6,8-15 | |
| X | US 2024/207795 A1 (EMERSON JILLIAN A [US] ET AL) 27 June 2024 (2024-06-27) * the whole document * | 1-15 | |
| X | WO 2022/030198 A1 (NITTO DENKO CORP [JP]) 10 February 2022 (2022-02-10) * the whole document * | 1-6,8-15 | |

-/--

The present search report has been drawn up for all claims

| Place of search | Date of completion of the search | Examiner |
|---|---|---|
| Munich | 23 June 2025 | Rüdiger, Patrick |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>EP 24 21 7359 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | WO 2023/162287 A1 (REFINVERSE INC [JP])<br>31 August 2023 (2023-08-31)<br>* the whole document *<br>----- | 6 | |
| | | | **TECHNICAL FIELDS<br>SEARCHED (IPC)** |

The present search report has been drawn up for all claims

| Place of search | Date of completion of the search | Examiner |
|---|---|---|
| Munich | 23 June 2025 | Rüdiger, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...............................................................................................

& : member of the same patent family, corresponding
document

EPO FORM 1503 03.82 (P04C01)

EP 4 755 603 A1

## ANNEX TO THE EUROPEAN SEARCH REPORT
## ON EUROPEAN PATENT APPLICATION NO.

EP 24 21 7359

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| US 2017114206 A1 | 27-04-2017 | CA 3002833 A1 | 27-04-2017 |
| | | CN 109476959 A | 15-03-2019 |
| | | EP 3365407 A1 | 29-08-2018 |
| | | US 2017114206 A1 | 27-04-2017 |
| | | WO 2017070370 A1 | 27-04-2017 |
| US 10002549 B2 | 19-06-2018 | CN 102449677 A | 09-05-2012 |
| | | EP 2415042 A1 | 08-02-2012 |
| | | ES 2622956 T3 | 10-07-2017 |
| | | PL 2415042 T3 | 31-08-2017 |
| | | US 2012034402 A1 | 09-02-2012 |
| | | US 2015255008 A1 | 10-09-2015 |
| | | WO 2010117774 A1 | 14-10-2010 |
| US 2024207795 A1 | 27-06-2024 | AR 127092 A1 | 20-12-2023 |
| | | BR 112023021380 A2 | 19-12-2023 |
| | | CN 117157198 A | 01-12-2023 |
| | | EP 4334135 A1 | 13-03-2024 |
| | | JP 2024519206 A | 09-05-2024 |
| | | TW 202244154 A | 16-11-2022 |
| | | US 2024207795 A1 | 27-06-2024 |
| | | WO 2022235343 A1 | 10-11-2022 |
| WO 2022030198 A1 | 10-02-2022 | CN 116075566 A | 05-05-2023 |
| | | JP 7688644 B2 | 04-06-2025 |
| | | JP WO2022030198 A1 | 10-02-2022 |
| | | KR 20230048101 A | 10-04-2023 |
| | | TW 202212512 A | 01-04-2022 |
| | | US 2023312990 A1 | 05-10-2023 |
| | | WO 2022030198 A1 | 10-02-2022 |
| WO 2023162287 A1 | 31-08-2023 | EP 4484478 A1 | 01-01-2025 |
| | | JP 7118485 B1 | 16-08-2022 |
| | | JP 2023125970 A | 07-09-2023 |
| | | KR 20240157663 A | 01-11-2024 |
| | | WO 2023162287 A1 | 31-08-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8492199 B2
- US 20240076586 A1
- US 10260027 B2
- US 20020000239 A1

- WO 2022214176 A1
- US 6652665 B1
- US 6805753 B2
- US 20020061998, Cray

**Non-patent literature cited in the description**

- **DAVIES J T**. A quantitative kinetic theory of emulsion type, I. Physical chemistry of the emulsifying agent. *Gas/Liquid and Liquid/Liquid Interface. Proceedings of the International Congress of Surface Activity*, 1957, 426-438